# EUROPÄISCHE PATENTSCHRIFT

(11) **EP 3 999 725 B1**
(45) Veröffentlichungstag und Bekanntmachung des Hinweises auf die Patenterteilung: **17.04.2024**
(21) Anmeldenummer: 20743106.5
(22) Anmeldetag: 15.07.2020
(51) Int. Cl.: F01N 3/10, F01N 3/20, F01N 3/28, F01N 3/30, F01N 3/36, F01N 5/02

(54) **ABGASNACHBEHANDLUNG**
EXHAUST GAS AFTERTREATMENT
POST-TRAITEMENT DES GAZ D'ÉCHAPPEMENT

(30) Priorität: 15.07.2019 DE 102019210415
(43) Veröffentlichungstag der Anmeldung: 25.05.2022
(73) Patentinhaber: Fraunhofer-Gesellschaft zur Förderung der angewandten Forschung e.V., 80686 München (DE)
(72) Erfinder: SZOLAK, Robert, 79110 Freiburg (DE); SUSDORF, Alexander, 79110 Freiburg (DE); RÜMMELE, Florian, 79110 Freiburg (DE)
(74) Vertreter: Friese Goeden Patentanwälte PartGmbB
(86) Internationale Anmeldenummer: PCT/EP2020/070015
(87) Internationale Veröffentlichungsnummer: WO 2021/009238

(56) Entgegenhaltungen:
- EP-A1- 2 368 024
- EP-A1- 2 388 451
- EP-A1- 2 570 625
- US-A1- 2011 061 374

## Beschreibung

Die Erfindung betrifft ein Verfahren zur Abgasnachbehandlung, die Verwendung eines katalytischen Verdampfers in einem solchen Verfahren, ein nach diesem Verfahren erhältliches Reduktionsmittel für die Abgasbehandlung, eine Vorrichtung zum Herstellen eines Reduktionsmittels für die Abgasnachbehandlung und die Verwendung dieser Vorrichtung zur Abgasnachbehandlung.

Abgasnachbehandlung ist die Bezeichnung für Verfahren, bei denen die Verbrennungsgase, nachdem sie den Brennraum oder die Brennkammer einer Brennkraftmaschine verlassen haben, auf mechanischem, katalytischem oder chemischem Weg gereinigt werden. Für die Reduktion von Stickoxiden (NOx) mit der selektiven katalytischen Reduktionstechnologie (Selective Catalytic Reduction, SCR) werden Katalysatoren und Reduktionsmittel, beispielsweise Ammoniak, eingesetzt. Eingespritzt wird dazu eine wässrige Harnstofflösung, aus der im weiteren Verlauf des Transports durch das Abgasrohr durch Thermolyse und Hydrolyse Ammoniak entsteht. Für die Reduktion von Kohlenwasserstoffen und Kohlenmonoxid können Dreiwegekatalysatoren eingesetzt werden.

Die Effektivität einer katalytischen Abgasnachbehandlung, d.h. die Umwandlungs- oder Konvertierungsrate, hängt neben anderen Faktoren entscheidend von der Betriebstemperatur ab. Unterhalb von ca. 250°C finden praktisch keine Reaktionen statt. Dies ist der Grund dafür, dass auch moderne Fahrzeuge nach dem Kaltstart hohe Schadstoffemissionen aufweisen. Der Katalysator ist in diesem Betriebszuständen noch nicht betriebswarm und wandelt die emittierten Schadstoffe somit nur unzureichend um.

Es gibt einige Strategien, die Abgastemperatur schnell anzuheben. Beispielsweise kann der Katalysator motornah im Abgasstrang plaziert werden. Dadurch ist aber zumindest bei Ottomotoren die Gefahr gegeben, dass in anderen Betriebszuständen, beispielsweise in der Nähe der Nennleistung, die Temperaturen zu hoch werden. Denn Temperaturen von 1000°C zerstören den Katalysator. Gute Umsetzungsraten und eine lange Lebensdauer sind bei 400°C bis 800°C gegeben. Alternativ kann die Abgastemperatur durch elektrische Heizeinrichtungen oder durch Nacheinspritzungen sowohl innermotorisch und/oder im Abgasstrang angehoben werden. Die Veröffentlichungen EP 2 388 451 A1 oder US 2011/061374 A1 zeigen Verfahren und Vorrichtungen zur Bereitstellung von Reduktionsmitteln mittels katalytischen Verdampfern.

Diese Maßnahmen haben jedoch die Wirkung, dass der Verbrauch nach dem Kaltstart weiter ansteigt und zusätzliche Emissionen erzeugt werden.

Ausgehend vom Stand der Technik liegt der Erfindung somit die Aufgabe zugrunde, ein Reduktionsmittel für die Abgasnachbehandlung ggf. einschließlich selektiver katalytischer Reduktion bereitzustellen, das eine katalytische Umwandlung bei niedrigeren Temperaturen ermöglicht.

Die Aufgabe wird erfindungsgemäß durch ein Verfahren zur Abgasnachbehandlung nach Anspruch 1, die Verwendung eines katalytischen Verdampfers in einem solchen Verfahren nach Anspruch 9 einem Reduktionsmittel nach Anspruch 10, einer Vorrichtung zum Herstellen eines Reduktionsmittels für die Abgasnachbehandlung nach Anspruch 11. Vorteilhafte Weiterbildungen der Erfindung finden sich in den Unteransprüchen.

Der Einsatz des Verfahrens erfolgt insbesondere dann, wenn das Abgas Stickoxide enthält. Insofern wird ein geregeltes System ins Auge gefasst. In den Motorkennfeldpunkten in denen das Abgas vermehrt Stickoxide enthält, wird es zugeschaltet. In anderen Motorkennfeldpunkten in denen durch die Verbrennung wenige oder tolerable Stickoxid-Mengen entstehen, ist das System nicht aktiv. Ist es nicht aktiv, wird die Zuleitung für Luft und Abgas gestoppt.

Das stickoxidhaltige Rohabgas kann ein unbehandeltes Rohabgas sein. Es kann auch ein behandeltes Rohabgas sein, das z.B. mit einem Partikelfilter und/oder Dieseloxidationskatalysator behandelt ist.

Die Schritte b) und c) können gleichzeitig ausgeführt werden. Im Schritt d) kann das Zuführen des Reduktionsmittels direkt in das Abgasnachbehandlungssystem erfolgen oder indem es in die Abgasleitung eingeleitet wird, die vom Motor zum Abgasnachbehandlungssystem führt.

Auf Basis der katalytischen Verdampfungstechnologie, die an sich bekannt ist, wurde das erfindungsgemäße Verfahren entwickelt, bei dem stickoxidhaltiges Rohabgas eines Motors, flüssiger Kraftstoff und eine Harnstofflösung eingesetzt werden. Durch die katalytische Umwandlung des Kraftstoffs im katalytischen Verdampfer wird innerhalb des Systems Wärme erzeugt. Auf diese Weise wird das System wesentlich unabhängiger vom Betrieb des Motors. Es wird somit möglich, losgelöst vom Motorbetrieb, insbesondere von Abgastemperatur und Abgasmassenstrom, Reduktionsmittel aus der wässrigen Harnstofflösung herzustellen. Zudem werden im erfindungsgemäßen Verfahren aus dem zugegebenen Kraftstoff Wasserstoff und Kohlenwasserstoffe, beispielsweise Ethen, erzeugt, die dem SCR-System der AGN als zusätzliches Reaktionsmittel, d.h. Reduktionsmittel, dienen.

Die zugeführten Mengen an Harnstofflösung und Kraftstoff sind die üblichen Mengen, wie sie bei der an sich bekannten Betriebsweise von katalytischen Verdampfern verwendet werden.

Das dem katalytischen Verdampfer zugesetzte stickoxidhaltige Rohabgas kann ein Teil der üblichen Motorabgase sein, d.h. vom Abgasstrom des Motors kann ein Teil abgezweigt und im Schritt a) als stickoxidhaltiges Rohabgas bereitgestellt werden, das in den katalytischen Verdampfer eingeleitet wird. Eine solche Aufteilung kann durch Klappen oder Schieber in der Abgasleitung erfolgen, die entsprechend angesteuert werden können. Das Rohabgas kann auch direkt vom Motor abgeleitet und dem katalytischen Verdampfer zugeführt werden.

Mit dem erfindungsgemäßen Verfahren wird vorteilhafterweise erreicht, dass im Gegensatz zur Aufheizung des Gesamtabgasstromes gemäß dem Stand der Technik lediglich ein kleiner Teilstrom des stickoxidhaltigen Rohabgases aufgeheizt werden muss. Durch die Umwandlung des Kraftstoffs wird zudem weitere Wärme erzeugt, die nicht elektrisch eingebracht werden muss. Für eine katalytische Umwandlung ist lediglich der Katalysator aufzuheizen. Die Reaktionen können über die Variation der Eduktströme geregelt werden.

Im erfindungsgemäßen Verfahren können katalytische Verdampfer eingesetzt werden, wie sie aus dem Stand der Technik an sich bekannt sind. Der Fachmann weiß auch, wie sie prinzipiell betrieben werden können. Ein Beispiel eines im erfindungsgemäßen Verfahren einsetzbaren katalytischen Verdampfers ist in der DE 10 2015 120 106 A1 beschrieben, auf die hinsichtlich der konstruktiven Details und der Betriebsweise im vollen Umfang verwiesen wird.

Der im erfindungsgemäßen Verfahren eingesetzte katalytische Verdampfer kann einen Katalysator aufweisen, der beispielsweise auf einen Träger aufgebracht sein kann. Der Träger mit dem Katalysator kann in ein Reaktionsgefäß so eingebracht sein, dass zwischen der inneren Oberfläche des Reaktionsgefäßes und der Katalysatoroberfläche ein Zwischenraum gebildet ist.

Beim Betrieb eines katalytischen Verdampfers kann beispielsweise der flüssige Brennstoff auf die Innenseite der Reaktorwand eines katalytischen Verdampfers zugegeben werden, während ein Oxidationsmittel, z.B. Luft, katalysatorseitig zugeführt wird. Ein geringer Teil des Brennstoffs oxidiert am Katalysator und die dabei erzeugte Wärme wird zur vollständigen Verdampfung des Brennstoffs genutzt. Die Wärmeübertragung erfolgt überwiegend durch die Wärmestrahlung von der heißen Katalysatoroberfläche auf die Oberfläche des Brennstoffs. Die Reaktorwand, auf die der Brennstoff aufgegeben wird, ist dabei kälter als der Brennstoff selbst. Es entstehen keinerlei Ablagerungen oder Verkrustungen.

Das in Schritt a) zugeführte stickoxidhaltige Rohabgas kann Restsauerstoff enthalten. Falls die Konzentration an Restsauerstoff im Rohabgas ausreichend ist, kann dies als Oxidationsmittel zum Betrieb des katalytischen Verdampfers ausreichend sein. Sollte die Konzentration an Restsauerstoff im stickoxidhaltigen Rohabgas zu niedrig sein, dann kann in einer Ausführungsform weiterhin in Schritt c) ein Oxidationsmittel in den katalytischen Verdampfer eingeleitet werden. Bei diesem Oxidationsmittel handelt es sich um ein zusätzliches Oxidationsmittel zum Restsauerstoff im Rohabgas. Ein solches Oxidationsmittel kann Sauerstoff oder ein sauerstoffhaltiges Medium, insbesondere Luft, sein. Die Menge des Oxidationsmittels kann dabei so gewählt werden, dass die üblichen Mengen von Oxidationsmittel in einem katalytischen Verdampfer erreicht werden. Die Luft kann aus der Umgebung kommen und gegebenenfalls durch einen Turbolader aufgeladen sein.

In einer Ausführungsform weist das in Schritt c) gebildete Reduktionsmittel Ammoniak (NH₃) auf. In einer weiteren Ausführungsform kann das Reduktionsmittel zusätzlich noch H₂, CO, Kohlenwasserstoffe, beispielsweise Ethen, und Mischungen dieser aufweisen.

In einer Ausführungsform kann durch die Veränderung der Eduktströme Kraftstoff, Harnstofflösung, stickoxidhaltiges Rohabgas und gegebenenfalls Oxidationsmittel je nach Betriebspunkt im Motorkennfeld ein individuelles Reduktionsmittel bereitgestellt werden. Die Bereitstellung dieses Reduktionsmittels in Schritt c) des erfindungsgemäßen Verfahrens steigert die Aktivität des SCR-Systems und somit die Reduktion von Stickoxiden im Motorenabgas. Besonders wirksam ist der Vorteil beim Kaltstart und anderen Betriebspunkten mit kaltem Abgasnachbehandlungssystem.

In einigen Ausführungsformen kann die Harnstofflösung, die in Schritt c) eingesetzt wird, eine wässrige Harnstofflösung sein, insbesondere eine 32,5 prozentige Harnstofflösung. Diese hat sich als besonders geeignet für Abgasnachbehandlungssysteme herausgestellt.

In einer Ausführungsform umfasst die Abgasnachbehandlung eine an sich bekannte Thermolyse und Hydrolyse sowie eine ebenfalls an sich bekannte selektive katalytische Reduktion.

Das aus dem katalytischen Verdampfer erhaltene Reduktionsmittel kann zuerst der Hydrolyse und dann der selektiven katalytischen Reduktion unterzogen werden. In einer weiteren Ausführungsform kann die Abgasnachbehandlung, gegebenenfalls einschließlich der selektiven katalytischen Reduktion, bei einer Temperatur von bereits 170°C (und ggf. höher, z.B. 180°C, 190°C oder 200°C) betrieben werden. Dies bedeutet also, dass mit dem erfindungsgemäßen Verfahren Abgasnachbehandlungen bereits bei deutlich niedrigeren Temperaturen als nach dem Stand der Technik bekannt anspringen und durchgeführt werden können.

Das erfindungsgemäße Verfahren kann zur Umwandlung von Stickoxiden für SCR-Systeme jeglicher Art von Verbrennungskraftmaschinen, die mit einem SCR-System zur Reduktion von NOx-Emissionen arbeiten, eingesetzt werden.

Gegenstand der Erfindung ist ferner die Verwendung eines katalytischen Verdampfers, wie er vorliegend ausführlich beschrieben wird, in einem erfindungsgemäßen Verfahren, wie es ebenfalls vorstehend im Detail beschrieben wurde.

Ferner wird ein Reduktionsmittel bereitgestellt, das nach dem erfindungsgemäßen Verfahren erhältlich ist. Hinsichtlich der Herstellungsweise und der Zusammensetzung wird auf vorstehende Ausführungen verwiesen. Insbesondere weist das Reduktionsmittel Wasserstoff, Kohlenwasserstoffe, insbesondere Ethen, Ammoniak und/oder Kohlenmonoxid auf.

Durch die vorstehend verwendeten Begriffe "dazu angepasst ist" wird darauf hingewiesen, dass die entsprechenden Leitungen so ausgelegt sind, dass die darin zuzuführenden Materialien ohne negative Auswirkungen geleitet werden können, d.h. dass sie beispielsweise gegenüber den zu leitenden Materialien inert sind. Ferner weist der Begriff "dazu angepasst ist" auch darauf hin, dass die entsprechenden Leitungen mit Reservoirs verbunden sind, die die zuzuführenden Materialien aufweisen.

Durch die vorstehenden Merkmale c1) und c2) wird deutlich gemacht, dass entweder der Harnstoff in der entsprechenden Lösung getrennt vom Kraftstoff (Merkmal c1)) zum katalytischen Verdampfer zugegeben wird oder dass alternativ (Merkmal c2)) eine Mischung von Harnstofflösung und Kraftstoff in den katalytischen Verdampfer eingeleitet werden. Eine Mischung kann insbesondere dann eingeleitet werden, wenn der Kraftstoff mit der Harnstofflösung mischbar ist. Dies trifft beispielsweise bei Alkoholen, wie Ethanol, als Kraftstoff zu.

In einer Ausführungsform der erfindungsgemäßen Vorrichtung kann diese weiterhin eine Oxidationsmittelzuleitung zum katalytischen Verdampfer aufweisen, die dazu angepasst ist, Oxidationsmittel in den katalytischen Verdampfer einzuleiten. Eine solche Zufuhr von Oxidationsmittel, beispielsweise Sauerstoff oder Luft, kann dann erforderlich werden, wenn das Rohabgas nicht die notwendige Konzentration an Restsauerstoff aufweist.

In einer Ausführungsform umfasst die Abgasnachbehandlung eine Vorrichtung für die Hydrolyse sowie eine Vorrichtung für eine an sich bekannte selektive katalytische Reduktion. Eine Vorrichtung für die Hydrolyse kann beispielsweise einen Hydrolysekatalysator umfassen. Eine Vorrichtung zur selektiven katalytischen Reduktion kann beispielsweise einen Katalysator für die selektive katalytische Reduktion aufweisen. Dabei können die Vorrichtung für die Hydrolyse und die Vorrichtung für die selektive katalytische Reduktion in voneinander verschiedenen Gehäusen vorgesehen sein. Dies ermöglicht es, diese Vorrichtungen unabhängig voneinander an verschiedenen Stellen der erfindungsgemäßen Vorrichtung zu verbauen.

Ferner ist Gegenstand der Erfindung die Verwendung der Vorrichtung, wie sie vorstehend beschrieben wurde, zur Abgasnachbehandlung, einschließlich einer selektiven katalytischen Reduktion.

Mit der vorstehend beschriebenen Vorrichtung können in einfacher und günstiger Weise die durch das erfindungsgemäße Verfahren erreichten Vorteile erzielt werden.

Nachfolgend soll die Erfindung anhand von Figuren ohne Beschränkung des allgemeinen Erfindungsgedankens näher erläutert werden. Dabei ist
- Figur 1: eine schematische Darstellung einer Ausführungsform einer Vorrichtung mit einem katalytischen Verdampfer zur Abgasnachbehandlung.
- Figur 2: zeigt eine schematische Darstellung einer weiteren Ausführungsform einer erfindungsgemäßen Vorrichtung.
- Figur 3: zeigt eine schematische Darstellung einer anderen Ausführungsform einer erfindungsgemäßen Vorrichtung.
- Figur 4: zeigt eine schematische Darstellung einer Ausführungsform der erfindungsgemäßen Vorrichtung.
- Figur 5: zeigt eine Ansicht eines beispielhaft einsetzbaren katalytischen Verdampfers.
- Figur 6: zeigt das Prinzip der Wirkungsweise des katalytischen Verdampfers von Figur 2.

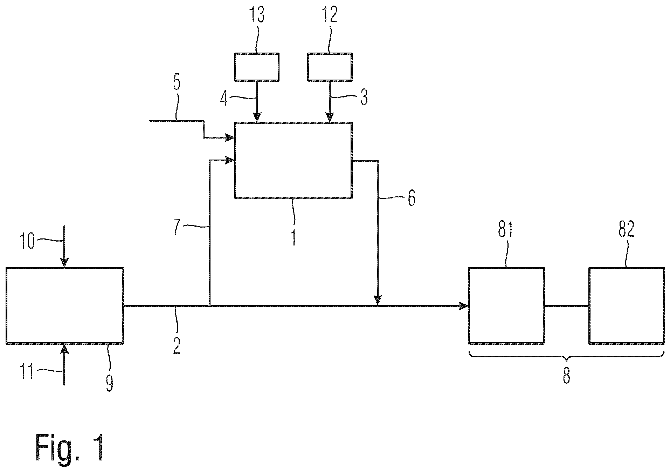

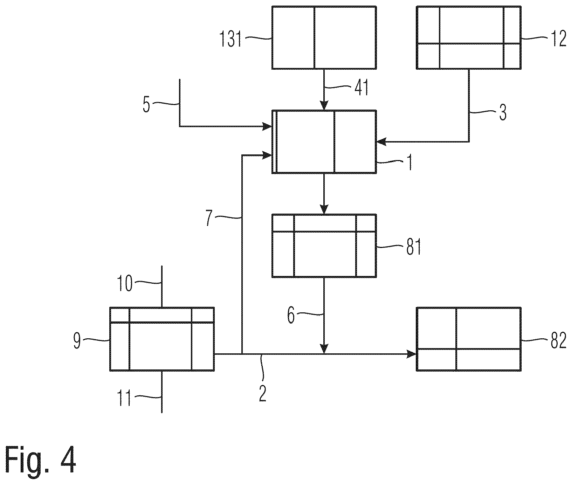

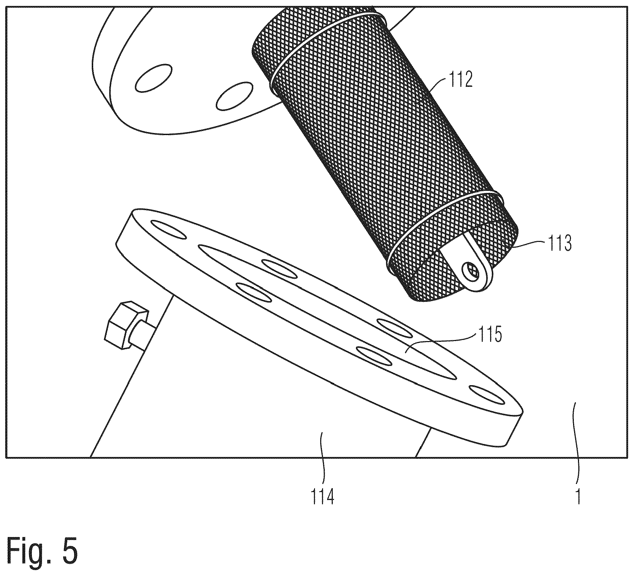

In Figur 1 ist schematisch eine Vorrichtung mit einem katalytischen Verdampfer 1, der in den nachfolgenden Figuren 4 und 5 näher erläutert wird, zur Abgasnachbehandlung gezeigt. Ein Motor 9, z.B. ein Dieselmotor, wird in üblicher Weise zum Betrieb eines Kraftfahrzeuges eingesetzt, wobei eine Kraftstoffzufuhr 10 und eine Luftzufuhr 11 erfolgt. Die entstandenen stickoxidhaltigen Rohabgase werden durch eine Leitung 2 aus dem Motor abgeleitet. Diese stickoxidhaltigen Rohabgase aus dem Motor 9 werden einer Vorrichtung zur Abgasnachbehandlung 8 zugeführt. Die Abgasnachbehandlung 8 weist eine Vorrichtung zur Hydrolyse 81, beispielsweise einen Hydrolysekatalysator, und eine Vorrichtung zur selektiven katalytischen Reduktion 82 auf. Die Vorrichtung zur Hydrolyse 81 und die Vorrichtung zur selektiven katalytischen Reduktion können in getrennten Gehäusen vorliegen. Zumindest ein Teil des stickoxidhaltigen Rohabgases wird über die Leitung 7 abgezweigt und dem katalytischen Verdampfer 1 zugeführt. Dem katalytischen Verdampfer wird ferner aus einem Reservoir für eine Harnstofflösung 13 über eine Harnstoffzuleitung 4 dem katalytischen Verdampfer 1 die Harnstofflösung zugeführt. Ferner wird von einem Kraftstoffreservoir 12 über eine Kraftstoffzuleitung 3 dem katalytischen Verdampfer 1 Kraftstoff zugeführt. Über eine Oxidationsmittelzuleitung 5 kann dem katalytischen Verdampfer 1 ggf. ein Oxidationsmittel zugeführt werden, beispielsweise Luft. In dem katalytischen Verdampfer 1 entsteht das Reduktionsmittel, das insbesondere NH₃, H₂, Kohlenwasserstoffe und CO umfassen kann, das über eine Leitung 6 in den Abgasstrang 2 des Motors 9 eingeleitet wird.

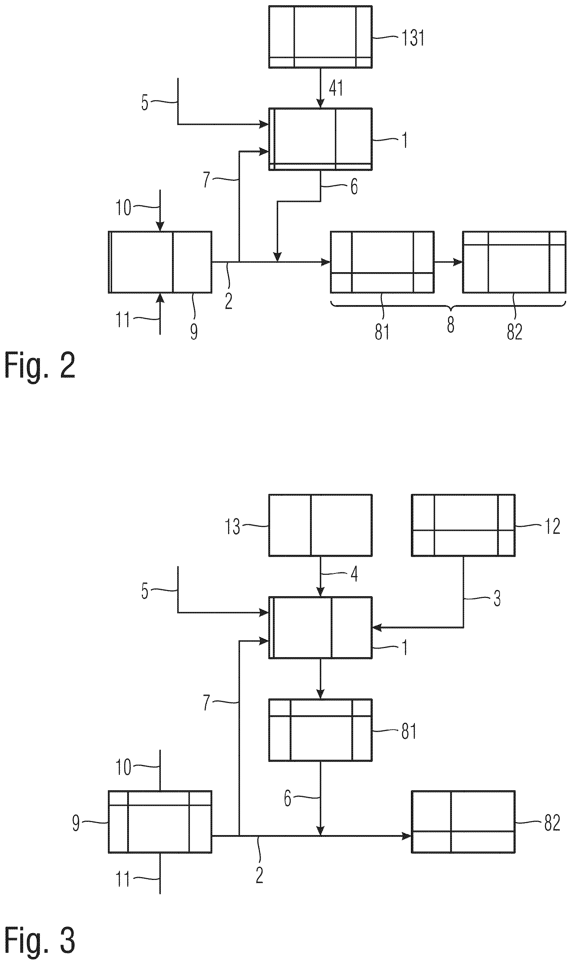

In Figur 2 ist eine weitere Ausführungsform der erfindungsgemäßen Vorrichtung schematisch gezeigt, wobei identische Bauteile der Figur 1 dieselben Bezugszeichen aufweisen, so dass hinsichtlich der konstruktiven Ausgestaltung und der Funktionsweise auf Fig. 1 verwiesen wird. Wie in Fig. 2 gezeigt ist, wird in dem Raum 131 ein Gemisch von Harnstoff und Kraftstoff hergestellt, und dann dieses Gemisch über die Zuleitung 41 in den katalytischen Verdampfer 1 eingeleitet. Das vorherige Mischen von Harnstoff und Kraftstoff kann bei Kraftstoffen angewendet werden, die mit Wasser mischbar sind, z.B. Alkohole, wie Ethanol.

In Figur 3 ist eine weitere Ausführungsform der erfindungsgemäßen Vorrichtung schematisch gezeigt, wobei identische Bauteile der Fig. 1 und 2 dieselben Bezugszeichen aufweisen, so dass hinsichtlich der konstruktiven Ausgestaltung und der Funktionsweise auf Fig. 1 und 2 verwiesen wird. In der Vorrichtung von Fig.3 wird zuerst das aus dem katalytischen Verdampfer 1 gewonnenen Reduktionsmittel in die Vorrichtung zur Hydrolyse 81 eingeleitet. Das daraus gewonnenen Material wird dann in den Abgasstrang 2 eingeleitet und dann in die Vorrichtung zur selektiven katalytischen Reduktion 82 weitergeleitet.

In Figur 4 ist eine weitere Ausführungsform der vorliegenden Erfindung dargestellt. Sie entspricht der in Figur 3 gezeigten Vorrichtung, wobei in dem Raum 131 ein Gemisch von Harnstoff und Kraftstoff hergestellt wird, das dann über die Zuleitung 41 in den katalytischen Verdampfer 1 eingeleitet wird.

In Figur 5 ist ein katalytischer Verdampfer 1 gezeigt, wie er im erfindungsgemäßen Verfahren eingesetzt werden kann. Der katalytische Verdampfer 1 weist einen Katalysator 112 auf, der auf ein Metallnetz 113 aufgebracht ist. Als Katalysator 112 und als Metallnetz 113 können dabei solche Materialien eingesetzt werden, wie sie aus dem Stand der Technik bekannt sind. Das Metallnetz 113 mit dem Katalysator 112 kann in einem Reaktionsgefäß 114 vorliegen. In Figur 5 erfolgt aus Gründen der Übersichtlichkeit die Darstellung so, dass der Katalysator 112 mit dem Metallnetz 113 aus dem Reaktionsgefäß 114 herausgezogen dargestellt ist. Wird der Katalysator 112 mit dem Metallnetz 113 in das Reaktionsgefäß eingeschoben, dann bildet sich zwischen der inneren Oberfläche 115 des Reaktionsgefäßes 114 und der Oberfläche des Katalysators 112 auf dem Metallnetz 113 ein Zwischenraum.

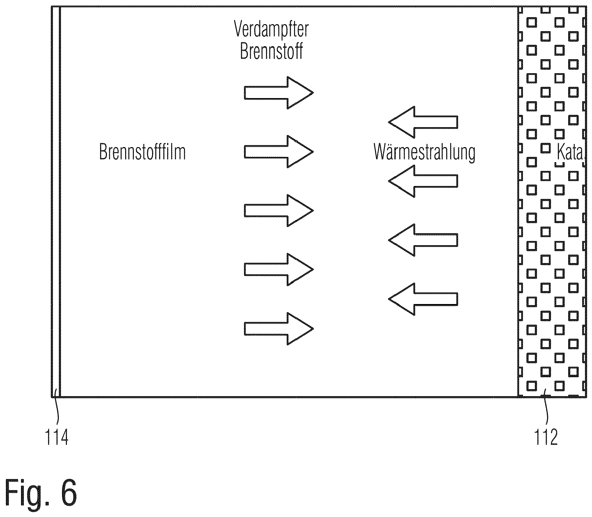

Figur 6 zeigt schematisch die Betriebsweise des in Figur 2 dargestellten katalytischen Verdampfers. Der Kraftstoff wird auf die untere Oberfläche des Reaktorgefäßes 114 zugegeben, während das stickoxidhaltige Rohabgas und gegebenenfalls ein weiteres Oxidationsmittel katalysatorseitig zugeführt werden. Ein geringer Teil des Kraftstoffs oxidiert am Katalysator 112 und die dabei erzeugte Wärme wird zur vollständigen Verdampfung des Brennstoffs genutzt. Die Wärmeübertragung erfolgt überwiegend durch Wärmestrahlung von der heißen Oberfläche des Katalysators 112 auf die Oberfläche des Brennstofffilms. Die Wand des Reaktorgefäßes 114, auf die der Brennstoff aufgegeben wird, kann dabei kälter als der Brennstoff selbst sein. So entstehen keinerlei Ablagerungen oder Verkrustungen.

Selbstverständlich ist die Erfindung nicht auf die in den Figuren dargestellte Ausführungsform beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Beschreibung oder die Ansprüche "erste" und "zweite" Merkmale definieren, so dient dies der Unterscheidung gleichartiger Merkmale ohne eine Rangfolge festzulegen.

## Patentansprüche

1. Verfahren zur Abgasnachbehandlung, enthaltend zumindest die Schritte:
a) Bereitstellen eines stickoxidhaltigen Rohabgases,
b) Einleiten des stickoxidhaltigen Rohabgases in einen katalytischen Verdampfer (1),
c) gleichzeitiges Einleiten einer Harnstofflösung und eines Kraftstoffes in den katalytischen Verdampfer (1), wodurch ein Reduktionsmittel erhalten wird, und
d) Zuführen des Reduktionsmittels in ein Abgasnachbehandlungssystem (8),
**dadurch gekennzeichnet, dass**
durch die Veränderung der Eduktströme Rohabgas, Kraftstoff und Harnstofflösung je nach Betriebspunkt im Motorkennfeld ein individuelles Reduktionsmittel bereitgestellt wird.

2. Verfahren nach Anspruch 1, **dadurch gekennzeichnet, dass** in Schritt c) zusätzlich ein Oxidationsmittel in den katalytischen Verdampfer (1) eingeleitet wird.

3. Verfahren nach Anspruch 1 oder 2, **dadurch gekennzeichnet, dass** das Reduktionsmittel Ammoniak enthält.

4. Verfahren nach einem der Ansprüche 1 bis 3, **dadurch gekennzeichnet, dass** das Reduktionsmittel Wasserstoff, Kohlenmonoxid und/oder Kohlenwasserstoffe enthält.

5. Verfahren nach einem der Ansprüche 1 bis 4, **dadurch gekennzeichnet, dass** die Harnstofflösung eine 32,5 %ige Harnstofflösung ist.

6. Verfahren nach einem der Ansprüche 2 bis 5, **dadurch gekennzeichnet, dass** das Einstellen der Zusammensetzung des Reduktionsmittels über das Einleiten der Harnstofflösung, des Kraftstoffes, des stickoxidhaltigen Rohabgases und/oder des Oxidationsmittels erfolgt.

7. Verfahren nach einem der Ansprüche 1 bis 6, **dadurch gekennzeichnet, dass** die Abgasnachbehandlung eine Thermolyse und Hydrolyse sowie eine selektive katalytische Reduktion umfasst.

8. Verfahren nach einem der Ansprüche 1 bis 7, **dadurch gekennzeichnet, dass** das Abgasnachbehandlungssystem bei einer Temperatur von etwa 170 °C oder höher betrieben wird.

9. Verwendung eines katalytischen Verdampfers (1) in einem Verfahren nach einem der Ansprüche 1 bis 8.

10. Reduktionsmittel, erhältlich nach einem Verfahren nach einem der Ansprüche 1 bis 8.

11. Vorrichtung zum Herstellen eines Reduktionsmittels für die Abgasnachbehandlung, enthaltend:
a) einen katalytischen Verdampfer (1),
b) eine Rohabgaszuleitung (7) zum katalytischen Verdampfer (1), die dazu angepasst ist, stickoxidhaltiges Rohabgas in den katalytischen Verdampfer (1) einzuleiten,
c1) eine Kraftstoffzuleitung (3) zum katalytischen Verdampfer (1), die dazu angepasst ist, Kraftstoff in den katalytischen Verdampfer (1) einzuleiten, und eine Harnstoffzuleitung (4) zum katalytischen Verdampfer (1), die dazu angepasst ist, eine Harnstofflösung gleichzeitig in den katalytischen Verdampfer (1) einzuleiten
oder
c2) eine Zuleitung (41), die dazu angepasst ist, eine Mischung in den katalytischen Verdampfer (1) einzuleiten, die Harnstoff und Kraftstoff umfasst, und
d) eine Leitung (6), die dazu eingerichtet ist, entstandenes Reduktionsmittel in einen Abgasstrang (2) eines Motors (9) oder in ein Abgasnachbehandlungssystem (8) einzuleiten,
dadurch gekennziechnet, dass
die Vorrichtung dazu eingerichtet ist, durch die Veränderung der Eduktströme Rohabgas, Kraftstoff und Harnstofflösung je nach Betriebspunkt im Motorkennfeld ein individuelles Reduktionsmittel bereitzustellen.

12. Vorrichtung nach Anspruch 11, **dadurch gekennzeichnet, dass** sie weiterhin eine Oxidationsmittelzuleitung (5) zum katalytischen Verdampfer (1) aufweist, die dazu angepasst ist, Oxidationsmittel in den katalytischen Verdampfer (1) einzuleiten.

13. Vorrichtung nach Anspruch 11 oder 12, **dadurch gekennzeichnet, dass** das Abgasnachbehandlungssystem (8) eine Vorrichtung für eine Hydrolyse (81) sowie eine Vorrichtung für eine selektive katalytische Reduktion (82) umfasst.

14. Verwendung einer Vorrichtung nach einem der Ansprüche 11 bis 13 zur Abgasnachbehandlung einschließlich einer selektiven katalytischen Reduktion.

## Claims

1. Method for exhaust gas aftertreatment, comprising at least the steps of:
a) providing a nitrogen oxide-containing raw exhaust gas,
b) introducing the nitrogen oxide-containing raw exhaust gas into a catalytic evaporator (1),
c) simultaneously introducing a urea solution and a fuel into the catalytic evaporator (1), as a result of which a reducing agent is obtained, and
d) supplying the reducing agent to an exhaust gas aftertreatment system (8),
**characterized in that**
an individual reducing agent is provided by changing the reactant streams raw exhaust gas, fuel and urea solution depending on the operating point in the engine map.

2. Method according to claim 1, **characterized in that** in step c) an oxidizing agent is additionally introduced into the catalytic evaporator (1).

3. Method according to claim 1 or 2, **characterized in that** the reducing agent contains ammonia.

4. Method according to any one of claims 1 to 3, **characterized in that** the reducing agent contains hydrogen, carbon monoxide and/or hydrocarbons.

5. Method according to any one of claims 1 to 4, **characterized in that** the urea solution is a 32.5% urea solution.

6. Method according to any one of claims 2 to 5, **characterized in that** the composition of the reducing agent is adjusted by introducing the urea solution, the fuel, the nitrogen oxide-containing raw exhaust gas and/or the oxidizing agent.

7. Method according to any one of claims 1 to 6, **characterized in that** the exhaust gas aftertreatment comprises a thermolysis and hydrolysis as well as a selective catalytic reduction.

8. Method according to any one of claims 1 to 7, **characterized in that** the exhaust gas aftertreatment system is operated at a temperature of about 170°C or higher.

9. Use of a catalytic evaporator (1) in a method according to any one of claims 1 to 8.

10. Reducing agent obtainable by a method according to any one of claims 1 to 8.

11. Device for producing a reducing agent for the exhaust gas aftertreatment, comprising:
a) a catalytic evaporator (1),
b) a raw exhaust gas supply line (7) to the catalytic evaporator (1), which is designed to introduce nitrogen oxide-containing raw exhaust gas into the catalytic evaporator (1),
c1) a fuel supply line (3) to the catalytic evaporator (1), which is designed to introduce fuel into the catalytic evaporator (1), and a urea supply line (4) to the catalytic evaporator (1), which is designed to simultaneously introduce a urea solution into the catalytic evaporator (1), or
c2) a supply line (41) which is designed to introduce a mixture comprising urea and fuel into the catalytic evaporator (1), and
d) a line (6) which is designed to introduce resulting reducing agent into an exhaust gas system (2) of an engine (9) or into an exhaust gas aftertreatment system (8),
**characterized in that**
the device is designed to provide an individual reducing agent by changing the reactant streams raw exhaust gas, fuel and urea solution depending on the operating point in the engine map.

12. Device according to claim 11, **characterized in that** it also has an oxidizing agent supply line (5) to the catalytic evaporator (1), which is designed to introduce oxidizing agent into the catalytic evaporator (1).

13. Device according to claim 11 or 12, **characterized in that** the exhaust gas aftertreatment system (8) comprises a device for a hydrolysis (71) and a device for a selective catalytic reduction (82).

14. Use of a device according to any one of claims 11 to 13 for the exhaust gas aftertreatment including a selective catalytic reduction.

## Revendications

1. Procédé de post-traitement des gaz d'échappement, comprenant au moins les étapes consistant à :
a) fournir des gaz d'échappement bruts contenant des oxydes d'azote,
b) introduire les gaz d'échappement bruts contenant des oxydes d'azote dans un évaporateur catalytique (1),
c) introduire simultanément une solution d'urée et un carburant dans l'évaporateur catalytique (1), ce qui donne un agent réducteur, et
d) amener l'agent réducteur dans un système de post-traitement des gaz d'échappement (8),
**caractérisé en ce qu'**un agent réducteur individuel est fourni par modification des flux d'éduits que sont les gaz d'échappement bruts, le carburant et la solution d'urée, en fonction du point de fonctionnement dans le champ caractéristique du moteur.

2. Procédé selon la revendication 1,
**caractérisé en ce que** dans l'étape c), un agent oxydant est introduit en supplément dans l'évaporateur catalytique (1).

3. Procédé selon la revendication 1 ou 2,
**caractérisé en ce que** l'agent réducteur contient de l'ammoniac.

4. Procédé selon l'une des revendications 1 à 3,
**caractérisé en ce que** l'agent réducteur contient de l'hydrogène, du monoxyde de carbone et/ou des hydrocarbures.

5. Procédé selon l'une des revendications 1 à 4,
**caractérisé en ce que** la solution d'urée est une solution d'urée à 32,5 %.

6. Procédé selon l'une des revendications 2 à 5,
**caractérisé en ce que** l'ajustement de la composition de l'agent réducteur est réalisé par l'introduction de la solution d'urée, du carburant, des gaz d'échappement bruts contenant des oxydes d'azote, et/ou de l'agent oxydant.

7. Procédé selon l'une des revendications 1 à 6,
**caractérisé en ce que** le post-traitement des gaz d'échappement comprend une thermolyse et une hydrolyse ainsi qu'une réduction catalytique sélective.

8. Procédé selon l'une des revendications 1 à 7,
**caractérisé en ce que** le système de post-traitement des gaz d'échappement est exploité à une température d'environ 170 °C ou plus.

9. Utilisation d'un évaporateur catalytique (1) dans un procédé selon l'une des revendications 1 à 8.

10. Agent réducteur susceptible d'être obtenu par un procédé selon l'une des revendications 1 à 8.

11. Dispositif de production d'un agent réducteur pour le post-traitement des gaz d'échappement, comprenant :
a) un évaporateur catalytique (1),
b) une conduite d'amenée de gaz d'échappement bruts (7) vers l'évaporateur catalytique (1), qui est adaptée pour introduire des gaz d'échappement bruts contenant des oxydes d'azote dans l'évaporateur catalytique (1),
c1) une conduite d'amenée de carburant (3) vers l'évaporateur catalytique (1), qui est adaptée pour introduire du carburant dans l'évaporateur catalytique (1), et une conduite d'amenée d'urée (4) vers l'évaporateur catalytique (1), qui est adaptée pour introduire simultanément une solution d'urée dans l'évaporateur catalytique (1),
ou
c2) une conduite d'amenée (41) adaptée pour introduire dans l'évaporateur catalytique (1) un mélange contenant de l'urée et du carburant, et
d) une conduite (6) conçue pour introduire l'agent réducteur résultant dans un circuit d'échappement (2) d'un moteur (9) ou dans un système de post-traitement des gaz d'échappement (8),
**caractérisé en ce que**
le dispositif est conçu pour fournir un agent réducteur individuel par modification des flux d'éduits que sont les gaz d'échappement bruts, le carburant et la solution d'urée, en fonction du point de fonctionnement dans le champ caractéristique du moteur.

12. Dispositif selon la revendication 11,
**caractérisé en ce qu'**il comprend en outre une conduite d'amenée d'agent oxydant (5) vers l'évaporateur catalytique (1), adaptée pour introduire l'agent oxydant dans l'évaporateur catalytique (1).

13. Dispositif selon la revendication 11 ou 12,
**caractérisé en ce que** le système de post-traitement des gaz d'échappement (8) comprend un dispositif pour une hydrolyse (81) ainsi qu'un dispositif pour une réduction catalytique sélective (82).

14. Utilisation d'un dispositif selon l'une des revendications 11 à 13 pour le post-traitement des gaz d'échappement, y compris une réduction catalytique sélective.
